# EUROPÄISCHE PATENTSCHRIFT

(11) **EP 4 605 264 B1**
(45) Veröffentlichungstag und Bekanntmachung des Hinweises auf die Patenterteilung: **19.08.2026**
(21) Anmeldenummer: 23765206.0
(22) Anmeldetag: 01.09.2023
(51) Int. Cl.: B60L 55/00, H02J 3/32, H02J 3/38

(54) **FESTSTELLEN EINER ANWESENHEIT EINES ZWISCHENSPEICHERS IN EINEM LOKALNETZWERK**
ASCERTAINING THE PRESENCE OF AN INTERMEDIATE STORAGE DEVICE IN A LOCAL GRID
VÉRIFICATION DE LA PRÉSENCE D'UN DISPOSITIF DE STOCKAGE INTERMÉDIAIRE DANS UN RÉSEAU LOCAL

(30) Priorität: 19.10.2022 DE 102022127446
(43) Veröffentlichungstag der Anmeldung: 27.08.2025
(73) Patentinhaber: Bayerische Motoren Werke Aktiengesellschaft, 80809 München (DE)
(72) Erfinder: BERGER, Jens, 81545 München (DE); PILKINGTON, Mark, 80995 München (DE)
(86) Internationale Anmeldenummer: PCT/EP2023/073982
(87) Internationale Veröffentlichungsnummer: WO 2024/083392

(56) Entgegenhaltungen:
- EP-A1- 3 938 236
- US-A1- 2011 298 422
- US-B2- 9 300 141

## Beschreibung

Die Erfindung betrifft ein Verfahren zum Feststellen einer Anwesenheit eines an einem lokalen elektrischen Energienetz einer Liegenschaft angeschlossenen Zwischenspeichers, wobei an einem Netzanschlusspunkt zwischen dem lokalen Energienetz und einem öffentlichen Energieverteilnetz ein erstes Energiemessgerät vorhanden ist. Die Erfindung betrifft auch eine Liegenschaft, die dazu eingerichtet ist, das Verfahren ablaufen zu lassen. Die Erfindung betrifft ferner ein System mit einer Liegenschaft und mindestens einem an einem Ladepunkt der Liegenschaft angeschlossenen Elektrofahrzeug. Die Erfindung ist insbesondere vorteilhaft anwendbar auf Einfamilienhäuser mit Energieversorgungseinrichtung, insbesondere Photovoltaikanlage.

Bidirektionales Laden, d.h., Aufladen und Entladen, eines Elektrofahrzeugs ist grundsätzlich bekannt. Dabei wird meist zwischen den Anwendungsfällen "Vehicle-to-Home", V2H, und "Vehicle-to-Grid", V2G, unterschieden. Im V2H-Anwendungsfall dient die Fahrzeugbatterie des Elektrofahrzeugs als ein elektrischer Zwischenspeicher, wenn das Elektrofahrzeug an einem hauseigenen Ladepunkt (z.B. einer sog. "Wallbox") angeschossen ist. Die Fahrzeugbatterie kann dabei beispielsweise tagsüber mit überschüssiger Energie aus einer hauseigenen Solar- bzw. Photovoltaikanlage geladen werden. Nachts wird elektrische Energie aus der Fahrzeugbatterie in das lokale Energienetz (Hausnetz) eingespeist. So wird der Eigenverbrauch des selbsterzeugten Solarstroms erhöht und ein Netzbezug von Strom aus einem öffentlichen Energieverteilnetz verringert. Im V2G-Anwendungsfall wird die Fahrzeugbatterie geladen, wenn Energiepreise am Energiemarkt niedrig sind, und entladen, wenn Energiepreise am Energiemarkt hoch sind. So können durch die Arbitrage von Einkaufspreis zu Verkaufspreis Erlöse erwirtschaftet werden. Das Planen und Steuern der Strom- bzw. Energieflüsse wird typischerweise von einem Heimenergiemanagementsystem, HEMS, im Zusammenspiel mit dem mindestens einen Ladepunkt bzw. dem mindestens einen Elektrofahrzeug durchgeführt, insbesondere unter Berücksichtigung von Mobilitätsanforderungen des Elektrofahrzeugs.

In Feldtests hat sich gezeigt, dass das lokale Energienetz oftmals anders als von seinem Betreiber (z.B. einem Hausbesitzer) angegeben, konfiguriert ist. Beispielsweise sind Stromerzeugungseinrichtungen, stationäre elektrische Zwischenspeicher und/oder elektrische Endverbraucher dem HEMS nicht angegeben oder nicht mit den korrekten Geräteparametern angegeben. Diese nicht angegebenen oder nicht korrekt angegebenen "parasitären" Energiequellen und/oder -senken wirken sich ungünstig auch die Regelung eines Ladevorgangs (d.h., eines Auflade- und/oder Entladevorgangs) des Elektrofahrzeugs aus, was im schlimmsten Fall zu einem Aufschwingen des Systems aus Elektrofahrzeug und Zwischenspeicher führen kann.

Beispielsweise kann im V2H-Anwendungsfall dann, wenn ein stationärer Zwischenspeicher zwar an das lokale Energienetz angeschlossen ist, aber dem HEMS nicht bekannt ist bzw. von dem HEMS nicht berücksichtigt wird, elektrische Energie, die aus einem rückspeisefähigen Elektrofahrzeug in das lokale Energienetz eingespeist werden soll, in den stationären Zwischenspeicher fließen, während für Endverbraucher Strom aus dem öffentlichen Verteilnetz bezogen werden muss, obwohl der stationäre Zwischenspeicher auch später geladen werden könnte. Außerdem kann eine lokale Null-Last Regelung am Netzanschlusspunkt durch das Vorhandensein des stationären Zwischenspeichers gestört werden.

Im V2G-Anwendungsfall kann ein nicht mit dem HEMS registrierter stationärer Zwischenspeicher bewirken, dass die von dem Elektrofahrzeug eingespeiste Energie nicht wie gewünscht in das öffentliche Energieverteilnetz eingespeist wird, sondern schon vorher im vorgelagerten Lokalnetz gespeichert wird.

US 10,913,374 B2 offenbart eine Steuervorrichtung zum Steuern eines Heimenergiemanagementsystems, HEMS. Die Steuervorrichtung zum Steuern des HEMS beinhaltet eine Kommunikationseinheit, die dazu konfiguriert ist, Energieverwaltungsinformationen zu empfangen, die eine photovoltaische Stromerzeugungsmenge, eine Stromverbrauchsmenge eines Haushaltsgeräts, eine verbleibende Strommenge einer Batterie eines Elektrofahrzeugs, eine minimale Lademenge des Elektrofahrzeugs von einem Gateway des HEMS umfassen, und eine Steuereinheit, die dazu eingerichtet ist, die Leistung der in dem Elektrofahrzeug bereitgestellten Batterie so zu steuern, dass das Elektrofahrzeug auf der Grundlage der Energieverwaltungsinformationen in einem Lademodus oder einem Entlademodus arbeitet.

DE 10 2012 202 465 A1 offenbart ein Stromversorgungssystem, umfassend einen Solarstromerzeugungsteil, einen Elektrizitätsspeicherteil, einen Verbrauchssteuerteil, einen Berechnungsteil für die vorhergesagte Menge zur Berechnung einer vorhergesagten Menge an verbrauchter Elektrizität und einer vorhergesagten erzeugten Menge an Elektrizität, einen Fehlmengenberechnungsteil zur Berechnung einer Fehlmenge, die eine Differenz zwischen der vorhergesagten verbrauchten Elektrizitätsmenge und der vorhergesagten erzeugten Elektrizitätsmenge ist, und einen Speichermengenfestlegungsteil zum Festlegen einer vorhergesagten Menge der gespeicherten Elektrizität. In einem spezifizierten Zeitfenster, in dem die Elektrizitätskosten niedriger als in anderen Zeitfenstern sind, führt der Verbrauchssteuerteil die Steuerung derart aus, dass der Elektrizitätsspeicherteil elektrische Versorgungselektrizität speichert, die an ein Gebäude geliefert wird, bis eine Menge der in dem Elektrizitätsspeicherteil gespeicherten Elektrizität die vorhergesagte gespeicherte Elektrizitätsmenge erreicht. Wenn in den anderen Zeitschlitzen eine Menge der Solarstromerzeugung größer als eine Elektrizitätsmenge ist, die von einer elektrischen Last verbraucht wird, ist, führt der Steuerteil die Steuerung derart aus, dass der Elektrizitätsspeicherteil einen Überschuss an Solarelektrizität speichert.

DE 11 2019 000 842 T5 offenbart eine Lade-/Entladevorrichtung (1). Die Lade-/Entladevorrichtung schließt einen Auswahleingang ein, um verbraucherabhängige Stromschätzungsdaten, die eine Schätzung für einen Strom angeben, der von einem elektrischen Verbraucher verbraucht werden wird, auf Basis von Verbraucherstromwertdaten zu ermitteln, die einen Verbraucherstromwert angeben, um von einer Solarstromerzeugung abhängige Stromschätzungsdaten, die eine Schätzung für den Strom angeben, der von einem Solarstromerzeugungssystem erzeugt werden wird, auf Basis von Daten zu einer geschätzten lokalen Sonneneinstrahlung zu ermitteln, und um eine von mehreren spezifischen Betriebsarten in Bezug auf Stromnutzung auf der Basis der verbraucherabhängigen Stromschätzungsdaten und der von einer Solarstromerzeugung abhängigen Stromschätzungsdaten und auf der Basis von Betriebsmodusdaten, die einen Betriebsmodus angegeben, der ein Stromnutzungsverfahren benennt, Preisdaten, die einen Preis des Wechselstroms, der von einem kommerziellen System geliefert werden soll, und einen Preis des Wechselstroms, der zu dem kommerziellen System geliefert werden soll, angeben, Stromwandlungseffizienzdaten, die eine Stromwandlungseffizienz eines Stromwandlers während des Ladens oder Entladens der Speicherbatterie angeben, und aktuellen Zeitdaten zu ermitteln.

Es ist die **Aufgabe** der vorliegenden Erfindung, die Nachteile des Standes der Technik zumindest teilweise zu überwinden und insbesondere eine Möglichkeit bereitzustellen, auf einfache Weise eine Anwesenheit oder ein Fehlen eines elektrischen Zwischenspeichers in einem lokalen Energienetz einer Liegenschaft automatisch festzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Feststellen einer Anwesenheit eines an einem lokalen elektrischen Energienetz einer Liegenschaft angeschlossenen Zwischenspeichers, wobei
- an einem Netzanschlusspunkt zwischen dem lokalen Energienetz und einem öffentlichen Energieverteilnetz ein erstes Energiemessgerät vorhanden ist,
- ein Ladepunkt für ein Elektrofahrzeug über ein zweites Energiemessgerät an das lokale Energienetz angeschlossen ist und
wobei bei dem Verfahren dann, wenn an dem Ladepunkt ein Elektrofahrzeug angeschlossen ist,
(a) während einer Laderuhephase des Elektrofahrzeugs mittels des ersten Energiemessgeräts eine Grundleistung gemessen wird,
(b) eine Batterie des Elektrofahrzeugs an dem Ladepunkt mit einer mittels des zweiten Energiemessgeräts gemessenen Aufladeleistung aufgeladen wird und gleichzeitig eine Leistung mittels des ersten Energiemessgeräts gemessen wird,
   alternativ oder zusätzlich zu Schritt (b)
(c) die Batterie des Elektrofahrzeugs an dem Ladepunkt mit einer mittels des zweiten Energiemessgeräts gemessenen Entladeleistung entladen wird und gleichzeitig eine Leistung mittels des ersten Energiemessgeräts gemessen wird,
(d) überprüft wird, ob die während eines Ladevorgangs gemessene Ladeleistung zumindest ungefähr der Differenz zwischen der mittels des ersten Energiemessgeräts gemessenen Leistung und der Grundleistung entspricht, und
(e) wenn dies der Fall ist, angenommen wird, dass kein Zwischenspeicher an dem lokalen Energienetz angeschlossen ist, ansonsten angenommen wird, dass ein Zwischenspeicher an dem lokalen Energienetz angeschlossen ist.

Dieses Verfahren weist den Vorteil auf, dass es automatisch eine zuverlässige Bestimmung der Anwesenheit eines elektrischen Zwischenspeichers ermöglicht, ohne dass dazu dedizierte und/oder komplexe Detektionsvorrichtungen und/oder -verfahren benötigt werden. Vielmehr wird hier die Batterie des Elektrofahrzeugs verwendet, um einen elektrischen Zwischenspeicher erkennen zu können, und zwar sowohl im V2G- als auch im V2H-Anwendungsfall. Darauf kann reagiert werden, um eine Energieverteilung in dem lokalen Energienetz und/oder zwischen dem lokalen Energienetz und dem öffentlichen Energieverteilnetz zu verbessern. Insbesondere kann ein Aufschwingen aufgrund eines nicht angegebenen bzw. nicht registrierten Zwischenspeichers verhindert werden. Das Verfahren beruht allgemein gesprochen darauf, dass detektiert wird, ob die während eines Ladens (d.h., Aufladens oder Entladens) des Elektrofahrzeugs in das lokale Energienetz eingespeiste(n) Leistung(en) den aus dem lokalen Energienetz abgerufene(n) Leistung(en) entsprechen oder ob es eine merkliche Differenz bzw. einen "Fehlbetrag" gibt. Gibt es keine merkliche Differenz, deutet dies darauf hin, dass kein unregistrierter bzw. unbekannter elektrischer Zwischenspeicher vorhanden ist. Dabei wird ausgenutzt, dass die Ladeleistung des Elektrofahrzeugs im Vergleich zu anderen an das lokale Energienetz angeschlossenen Leistungsquellen und Leistungssenken in der Regel sehr hoch ist und daher die Anwesenheit bzw. das Fehlen eines elektrischen Zwischenspeichers besonders zuverlässig feststellbar ist.

Ein Energiemessgerät misst Strom und Spannung an einem Punkt einer elektrischen Leitung, woraus sich die Leistung und Energiemengen zu den Messzeitpunkten (z.B. Zählerständen) berechnen lassen.

Unter Energie wird vorliegend elektrische Energie verstanden, auch wenn dies nicht explizit angegeben ist. Dies gilt analog für Leistung und Speicher. **Im** Folgenden wird die an dem zweiten Energiemessgerät gemessene Leistung als "Ladeleistung" bezeichnet, wenn nicht zwischen Aufladen und Entladen unterschieden wird, ansonsten als "Aufladeleistung" bzw. "Entladeleistung". Die Leistung kann einen zeitlichen Verlauf der Leistung umfassen, z.B. in Form eines sog. Lastgangs.

Allgemein kann dann, wenn ein Erfindungsaspekt vorliegend anhand einer Leistung bzw. von Leistungen beschrieben wird, dieser Erfindungsaspekt analog anhand der entsprechenden Energie über ein betrachtetes Zeitintervall beschrieben werden. Wird beispielsweise ein Erfindungsaspekt anhand einer über eine Zeitdauer Δt gemittelten Leistung L beschrieben, kann er auch anhand der über diese Zeitdauer Δt auftretenden Energie E = L · Δt beschrieben werden, usw.

Eine Liegenschaft kann insbesondere ein Haus, insbesondere Einfamilienhaus, aber auch ein Mehrfamilienhaus, ein Kleinbetrieb usw. sein.

Der elektrische Zwischenspeicher (im Folgenden auch nur als "Zwischenspeicher" bezeichnet) ist ein der Liegenschaft angeschlossener Strom- bzw. Energiespeicher, der zum Zwischenspeichern überschüssiger Energie und Entladen bei Energiebedarf dient. Der Zwischenspeicher kann ein dauerhaft bzw. stationär an das lokale Energienetz angeschlossener Energiespeicher sein, was auch als stationärer Zwischenspeicher" bezeichnet werden kann.

Das erste Energiemessgerät ist dazu eingerichtet, Daten über die über den Netzanschlusspunkt fließende elektrische Leistung bereitzustellen, z.B. einen Lastverlauf. Das erste Energiemessgerät kann ein von einem externen Betreiber (z.B. Messstellenbetreiber, Verteilnetzbetreiber, usw.) bereitgestelltes sog. "Smart Meter" sein, wobei der externe Betreiber dann bereit sein muss, diese Leistungsdaten mit dem Betreiber des lokalen Energienetzes bzw. einer von diesem beauftragten Instanz zu teilen. Insbesondere, falls durch den externen Betreiber nur ein herkömmlicher abzulesender Stromzähler bereitgestellt wird oder der externe Betreiber die Leistungsdaten nicht teilt, kann das erste Energiemessgerät ein von dem Betreiber des lokalen Energienetzes selbst installiertes Energiemessgerät sein, das z.B. mit dem Stromzähler des externen Betreibers topologisch in Reihe geschaltet ist.

Das Elektrofahrzeug kann ein Plug-In-Hybridfahrzeug, PHEV, oder ein vollelektrisch bzw. batterieelektrisch betriebenes Fahrzeug, BEV, sein. Das Elektrofahrzeug kann beispielsweise ein Personenwagen, Motorrad, Lastwagen usw. sein. Die Batterie ist insbesondere eine Antriebsbatterie des Elektrofahrzeugs.

Ein Ladepunkt, auch als EVSE bezeichnet, dient dem Laden des Elektrofahrzeugs. Der Ladepunkt kann eine mit dem Elektrofahrzeug über ein Ladekabel zu verbindende Ladestation sein, insbesondere bei Hausanschluss eine Wallbox. Ein Ladepunkt kann aber auch ein mit dem Elektrofahrzeug induktiv koppelnder Stellplatz sein.

Der Ladepunkt kann ein das Elektrofahrzeug unidirektional aufladender Ladepunkt sein oder alternativ ein bidirektionaler Ladepunkt sein, der dazu eingerichtet, ein Elektrofahrzeug bidirektional zu laden, also wahlweise aufzuladen oder zu entladen.

Es ist eine Weiterbildung, dass der Ladepunkt dazu eingerichtet ist, das Elektrofahrzeug mit Gleichstrom zu laden. Es ist eine Weiterbildung, dass der Ladepunkt dazu eingerichtet ist, das Elektrofahrzeug mit Wechselstrom zu laden.

Es ist eine Weiterbildung, dass der Ladepunkt und das Elektrofahrzeug über einen Kommunikationskanal digital kommunizieren können, z.B. bei Nutzung eines Ladekabels gemäß ISO 15118-2 und/oder ISO 15118-20. Dass an dem Ladepunkt ein Elektrofahrzeug angeschlossen ist, kann somit - je nach Art des Ladepunkts - bedeuten, dass es über ein Ladekabel oder induktiv an dem Ladepunkt angeschlossen ist.

Mittels des zweiten Energiemessgeräts lässt sie die zwischen dem Elektrofahrzeug und dem lokalen Energienetz fließende Leistung erfassen, insbesondere die zum Aufladen des Elektrofahrzeugs verbrauchte Aufladeleistung und die beim Entladen in das lokale Energienetz rückgespeiste Entladeleistung.

Unter eine Laderuhephase wird ein Zeitdauer verstanden, an der kein Ladevorgang durchgeführt wird, also weder ein Aufladevorgang noch ein Entladevorgang. Während einer Anschlusszeitdauer des Elektrofahrzeugs an dem Ladepunkt können sich - z.B. je nach Ladewunsch und/oder Ladeplan - Auflade-, Entlade- und/oder Laderuhephasen abwechseln.

Die Grundleistung entspricht einer durch das erste Energiemessgerät gemessenen Leistung, bei der das Elektrofahrzeug weder auflädt noch entlädt. Wenn die Grundleistung für eine bestimmte Zeitdauer gemessen wird, kann sie z.B. dem während dieses Zeitraums höchsten gemessen Werts, dem während dieses Zeitraums niedrigsten gemessen Werts oder einem über diesen Zeitraum gemittelten Wert entsprechen.

Die alternativen oder zusätzlichen Schritte (a) und (b) können auch so formuliert sein, dass eine Batterie des Elektrofahrzeugs an dem Ladepunkt mit mindestens einer mittels des zweiten Energiemessgeräts gemessenen Ladeleistung (d.h., einer Aufladeleistung und/oder einer Entladeleistung) geladen (d.h., aufgeladen bzw. entladen) wird und gleichzeitig mittels des ersten Energiemessgeräts eine Leistung gemessen wird.

Schritt (d) kann auch so formuliert werden, dass überprüft wird, ob die Differenz zwischen einerseits der mittels des ersten Energiemessgeräts gemessenen Leistung minus der Grundleistung und andererseits der Ladeleistung zumindest ungefähr null ist, oder kann so formuliert werden, dass überprüft wird, ob die Differenz zwischen der mittels des ersten Energiemessgeräts gemessenen Leistung minus der Grundleistung zumindest ungefähr der Ladeleistung entspricht.

Dass in Schritt (d) überprüft wird, ob die während eines Ladevorgangs gemessene Ladeleistung "zumindest ungefähr" der Differenz zwischen der mittels des ersten Energiemessgeräts gemessenen Leistung und der Grundleistung entspricht, umfasst insbesondere, dass sich die beiden Terme um nicht mehr als eine vorgegebene Abweichung voneinander unterscheiden. Diese Abweichung kann z.B. ein Prozentwert sein. Die Berücksichtigung der Abweichung ergibt den Vorteil, dass so während einer Ladephase nicht vorhersagbare Schwankungen des Verbrauchs von an des lokale Energienetz angeschlossenen Endverbrauchern (z.B. Elektrogeräten) nicht zu einem fehlerhaften Ergebnis führen.

Falls die Überprüfung positiv ist, kann in einer Weiterbildung angenommen werden, dass kein Zwischenspeicher an dem lokalen Energienetz angeschlossen ist, ansonsten kann in einer Weiterbildung angenommen werden, dass ein Zwischenspeicher an dem lokalen Energienetz angeschlossen ist.

Es ist eine Ausgestaltung, dass beide Schritte (b), betreffend den Aufladevorgang, und (c), betreffend den Entladevorgang, durchgeführt werden, wobei in Schritt (d)
- in einem Teilschrittschritt (d1) überprüft wird, ob die während des Aufladevorgangs gemessene Aufladeleistung zumindest ungefähr der Differenz zwischen der mittels des ersten Energiemessgeräts gemessenen Leistung und der Grundleistung entspricht, und
- in einem Teilschrittschritt (d2) überprüft wird, ob die während des Entladevorgangs gemessene Entladeleistung zumindest ungefähr der Differenz zwischen der mittels des ersten Energiemessgeräts gemessenen Leistung und der Grundleistung entspricht,
   und wobei
- in Schritt (e) nur dann, wenn dies für beide Teilschritte (d1) und (d2) der Fall ist, angenommen wird, dass kein Zwischenspeicher an dem lokalen Energienetz angeschlossen ist.

So wird der Vorteil erreicht, dass Erkennung eines Zwischenspeichers besonders zuverlässig wird. Denn bei - grundsätzlich ebenfalls möglicher - Durchführung nur eines der Schritte (b) oder (c) ist es in der Praxis zwar eher unwahrscheinlich, aber nicht auszuschließen, dass in Schritt (b) der Zwischenspeicher vollständig entladen ist oder in Schritt (c) der Zwischenspeicher vollständig aufgeladen ist, in welchen Fällen die Anwesenheit bzw. des Fehlen des Zwischenspeichers nicht richtig festgestellt werden würde. Diese Ausnahmefälle können mittels der vorliegenden Ausgestaltung ausgeschlossen werden. Die Ausgestaltung kann auch so formuliert sein, dass in Schritt (e) dann, wenn dies auch nur für einen der beiden Teilschritte (d1) und (d2) der Fall ist, angenommen wird, dass ein Zwischenspeicher an dem lokalen Energienetz angeschlossen ist.

Es ist eine Weiterbildung, dass nur dann angenommen wird, dass ein stationärer Zwischenspeicher an dem lokalen Energienetz angeschlossen ist, wenn sowohl die während eines Aufladevorgangs gemessene Aufladeleistung als auch die während eines Entladevorgangs gemessene Entladeleistung jeweils merklich von der mittels des ersten Energiemessgeräts am Netzanschlusspunkt gemessenen Leistung abzüglich der Grundleistung abweichen.

Die Reihenfolge, mit der die Schritte (b) und (c) durchgeführt werden, ist grundsätzlich beliebig.

Werden beide Schritte (b) und (c) durchgeführt, kann ein Ladezustand (auch als "State-of-Charge", SoC, bezeichnet) der Batterie vor und nach dem Durchführen gleich sein, in welchem Fall das Auf- und Entladen auch als reiner Messvorgang angesehen werden kann, falls entsprechende Phasen zeitlich nicht auch zum Erreichen eines ökonomischen und/oder ökologischen Vorteils festgesetzt worden sind.

Es ist eine Weiterbildung, dass Schritt (b) und/oder Schritt (c) zeitlich unmittelbar auf Schritt (a) folgen. Dadurch wird der Vorteil erreicht, dass sich die Verlässlichkeit des Verfahrens erhöht, weil die Wahrscheinlichkeit, dass sich die Grundlast bei Durchführung der Schritte (b) und/oder (c) z.B. tageszeitlich bereits merklich geändert hat, gering gehalten wird.

Es ist eine Ausgestaltung, dass die Ladeleistung auf einen Wert von mindestens 75 % der maximalen Ladeleistung eingestellt wird, insbesondere auf mindestens 90 % der maximalen Ladeleistung, insbesondere auf mindestens 95 % der maximalen Ladeleistung, insbesondere auf die maximale Ladeleistung. Dies ergibt den Vorteil, dass die Zuverlässigkeit des Verfahrens gesteigert werden kann, weil die Größe der Ladeleistung gegenüber der Grundleistung besonders hoch ist und dadurch der Einfluss der Grundleistung auf die Überprüfung in Schritt (d) bzw. in den Teilschritten (d1) und (d2) vorteilhafterweise gering gehalten werden kann, insbesondere Schwankungen der Grundleistung weniger ins Gewicht fallen.

Es ist eine Ausgestaltung, dass als Zeitraum zum Durchführen des Verfahrens ein nächtlicher Zeitraum am Ort des lokalen Energienetzes gewählt wird, insbesondere während einer typischen Nachtruhe, z.B. zwischen 0 Uhr und 4 Uhr. Dies ergibt den Vorteil, dass von einem Nutzer aktiv aktivierte elektrische Endverbraucher wie Spülmaschinen, Waschmaschinen, Herde, Fernseher usw. in der Regel nicht laufen und dadurch die Grundleistung erstens besonders gering ist und zweitens besonders wenig schwankt. In weiterer Vorteil besteht darin, dass die Wahrscheinlichkeit, dass das Elektrofahrzeug innerhalb dieses Zeitraums bewegt werden soll, gering ist. Außerdem ist der Einfluss einer möglicherweise an das lokale Energienetz angeschlossenen Photovoltaikanlage auf das Verfahren dann vorteilhafterweise vernachlässigbar.

Es ist eine Ausgestaltung, dass in Schritt (a) eine Schwankungsbreite der Grundleistung bestimmt wird und in Schritt (d) überprüft wird, ob die während des Entladevorgangs gemessene Ladeleistung der Differenz zwischen der mittels des ersten Energiemessgeräts gemessenen Leistung und der Grundleistung innerhalb der Schwankungsbreite der Grundleistung entspricht. Dies erhöht die Zuverlässigkeit des Verfahrens weiter, da so anstelle einer z.B. rein geschätzten vorgegebenen Abweichung die Abweichung quantifiziert wird.

Es ist eine Ausgestaltung, dass an das lokale Energienetz mindestens eine elektrische Energieerzeugungseinheit angeschlossen ist. Dies ist besonders vorteilhaft, um zumindest teilweise lokal autark elektrische Energie zu erzeugen und ggf. auch profitabel in das öffentliche Stromverteilnetz einzuspeisen. Solche Energieerzeugungseinheiten können beispielsweise eine Photovoltaikanlage und/oder eine Windkraftanlage umfassen.

Es ist eine Weiterbildung, dass dem Betreiber des lokalen Energienetzes nicht bekannt ist, welche von der mindestens einen elektrischen Energieerzeugungseinheit erzeugte ("Einspeise-") Leistung in das lokale Energienetz eingespeist wird. Dies kann z.B. daran liegen, dass kein entsprechendes Energiemessgerät vorhanden ist oder dass es zwar vorhanden ist, sich die Daten aber nicht oder zumindest nicht in Echtzeit übermitteln lassen. Speziell für den Fall, dass eine Photovoltaikanlage vorhanden ist, kann es vorteilhaft sein, das Verfahren nachts durchlaufen zu lassen oder sich tagsüber auf Historienwerte oder tabellierte Anlagenwerte zu stützen, ggf. zusammen mit einer Erzeugungsprognose, die beispielsweise Anlagenparameter und eine Wettervorhersage nutzen kann.

Es ist eine Ausgestaltung, dass die von der mindestens einen Energieerzeugungseinheit in das lokale Energienetz eingespeiste Einspeiseleistung mittels mindestens eines dritten Energiemessgeräts gemessen wird (und die Messdaten dem Betreiber des lokalen Energienetzes bereitgestellt werden). Dies ergibt den Vorteil, dass der Betreiber des lokalen Energienetzes den Einfluss der mindestens einen Energieerzeugungseinheit auf das Verfahren eliminieren kann und dadurch die Zuverlässigkeit des Verfahrens steigern kann. Dies kann z.B. durch die Ausgestaltung umgesetzt sein, dass
- in Schritt (a) während der Laderuhephase des Elektrofahrzeugs mittels des ersten Energiemessgeräts die Grundleistung gemessen wird und daraus eine reduzierte Grundleistung berechnet wird, welche der mittels des ersten Energiemessgeräts gemessenen Grundleistung abzüglich der mittels des mindestens einen dritten Energiemessgeräts gemessen eingespeisten Einspeiseleistung entspricht, und
- in Schritt (d) überprüft wird, ob die während eines Ladevorgangs gemessene Ladeleistung zumindest ungefähr der Differenz zwischen der mittels des ersten Energiemessgeräts gemessenen Leistung und der Summe von reduzierter Grundleistung und Einspeiseleistung entspricht.

Dies ergibt den Vorteil, dass Schwankungen der Einspeiseleistung präzise erfasst und berücksichtigt werden können. Die reduzierte Grundleistung kann insbesondere der von an das lokale Energienetz angeschlossenen Endverbrauchern verbrauchten Leistung entsprechen.

Das dritte Energiemessgeräts kann z.B. in die Energieerzeugungseinheit integriert sein oder kann ein separates Bauteil sein.

Es ist eine Ausgestaltung, dass aus dem zeitlichen Integral einer Differenz zwischen Ladeleistung des Elektrofahrzeugs einerseits und der Differenz der mittels des ersten Energiemessgeräts gemessenen Leistung und der Grundleistung andererseits eine Mindestkapazität des stationären Zwischenspeichers berechnet wird. Dies ergibt den Vorteil, dass eine Steuerung des lokalen Energienetzes, insbesondere einschließlich des Elektrofahrzeugs, verbessert durchgeführt werden kann. Allgemein kann die Mindestkapazität des stationären Zwischenspeichers durch zeitliche Integration bzw. Aufsummierung der Differenzen bzw. "Fehlbeträge" zwischen den in das lokale Energienetz eingespeisten Leistung(en) und den aus dem lokalen Energienetz entnommenen Leistung(en) bestimmt werden. Dabei kann z.B. über einen gesamten Ladevorgang oder nur einen Teil davon zeitlich integriert werden. Die in das lokale Energienetz eingespeisten Leistung(en) können bei Vorhandensein einer Energieerzeugungseinrichtung deren Einspeiseleistung(en) umfassen.

Werden beide Schritte (b) und (c) durchgeführt, kann als Mindestkapazität des Zwischenspeichers der höchste davon ermittelte Wert angenommen werden. Wird das Verfahren mehrfach durchgeführt, ohne dass zwischenzeitlich ein Benutzer einen Wert der Kapazität des Zwischenspeichers angegeben hat, kann als Mindestkapazität des Zwischenspeichers der höchste dabei ermittelte Wert angenommen werden.

Es ist eine Ausgestaltung, dass die Schritte (a) bis (e) bei angeschlossenem Elektrofahrzeug täglich oder wöchentlich wiederholt werden. Dadurch kann automatisch vergleichsweise schnell auf einen angeschlossenen, aber nicht registrierten, oder auf einen nicht angeschlossenen Zwischenspeicher reagiert werden.

Es ist eine Ausgestaltung, dass die Liegenschaft mindestens einen Ladepunkt zum Laden eines Elektrofahrzeugs aufweist und mit einer Datenverarbeitungseinrichtung ausgerüstet oder gekoppelt ist, die dazu eingerichtet ist, einen Ladeplan zum Laden eines an einem Ladepunkt angeschlossenen Elektrofahrzeugs aufzustellen. Die Datenverarbeitungseinrichtung kann ein Teil der Liegenschaft darstellen oder kann eine externe Instanz wie ein Netzwerkserver oder ein Cloudrechner sein. Es ist eine Weiterbildung, dass die Datenverarbeitungseinrichtung als HEMS bzw. HEMS-Rechner dient.

Es ist eine Ausgestaltung, dass dann, wenn die Datenverarbeitungseinrichtung so konfiguriert ist, dass sie davon ausgeht, dass kein elektrischer Zwischenspeicher an dem lokalen Energienetz angeschlossen ist, und in Schritt (e) angenommen wird, dass ein Zwischenspeicher an dem lokalen Energienetz angeschlossen ist, mindestens eine erste Aktion ausgelöst wird, und/oder dann, wenn die Datenverarbeitungseinrichtung so konfiguriert ist, dass sie davon ausgeht, dass ein elektrischer Zwischenspeicher an dem lokalen Energienetz angeschlossen ist, und in Schritt (e) angenommen wird, dass kein Zwischenspeicher an dem lokalen Energienetz angeschlossen ist, mindestens eine zweite Aktion ausgelöst wird.

Es ist eine Ausgestaltung, dass die erste Aktion mindestens eine Benachrichtigung eines Nutzers und/oder ein Umkonfigurieren der Datenverarbeitungseinrichtung so, dass sie davon ausgeht, dass ein Zwischenspeicher an dem lokalen Energienetz angeschlossen ist, umfasst. Das Umkonfigurieren kann auch so ausgedrückt werden, dass der Zwischenspeicher an der Datenverarbeitungseinrichtung angemeldet oder registriert wird. Die Benachrichtigung kann beispielsweise eine Übermittlung einer Nachricht an eine Nutzerendgerät umfassen, z.B. des Betreibers der Liegenschaft.

Es ist eine Ausgestaltung, dass das Umkonfigurieren der Datenverarbeitungseinrichtung umfasst, dass der Datenverarbeitungseinrichtung die Mindestkapazität des Zwischenspeichers mitgeteilt wird.

Es ist eine Ausgestaltung, dass die zweite Aktion mindestens eine Benachrichtigung eines Nutzers und/oder ein Umkonfigurieren der Datenverarbeitungseinrichtung so, dass sie davon ausgeht, dass kein elektrischer Zwischenspeicher an dem lokalen Energienetz angeschlossen ist, umfasst. Das Umkonfigurieren kann hier so ausgedrückt werden, dass der Zwischenspeicher an der Datenverarbeitungseinrichtung abgemeldet oder unregistriert wird.

Die Aufgabe wird auch gelöst durch eine Liegenschaft, insbesondere ein Einfamilienhaus, wobei die Liegenschaft dazu eingerichtet ist, das Verfahren nach einem der vorhergehenden Ansprüche ablaufen zu lassen. Die Liegenschaft kann analog zu dem Verfahren ausgebildet werden, und umgekehrt, und weist die gleichen Vorteile auf.

So weist die Liegenschaft ein lokales Energienetz auf, an dem typischerweise elektrische Endverbraucher wie Küchengeräte, Unterhaltungselektronik, Waschmaschinen, Warmwasserboiler, Klimaanlagen, usw. angeschlossen sind.

Das lokale Energienetz der Liegenschaft ist über einen Netzanschlusspunkt mit einem öffentlichen Energieverteilnetz verbunden, wobei ein Energiefluss über den Netzanschlusspunkt mittels eines ersten Energiemessgeräts messbar ist.

Die Liegenschaft weist ferner mindestens einen konduktiv oder induktiv mit einem Elektrofahrzeug koppelbaren Ladepunkt auf, z.B. mindestens eine Wallbox. Ein Energiefluss zu und von dem Elektrofahrzeug ist mittels eines zweiten Energiemessgeräts messbar.

Das lokale Energienetz der Liegenschaft kann zudem mindestens eine elektrische Energieerzeugungseinheit aufweisen, z.B. eine Photovoltaikanlage. Von der mindestens einen Energieerzeugungseinheit in das lokale Energienetz eingespeiste Einspeiseleistung ist in einer Weiterbildung mittels mindestens eines dritten Energiemessgeräts messbar.

Das lokale Energienetz der Liegenschaft kann mindestens einen elektrischen Zwischenspeicher aufweisen.

Das lokale Energienetz ist mittels einer Datenverarbeitungseinrichtung steuerbar, die Teil der Liegenschaft sein kann oder ein bezüglich der Liegenschaft externe Instanz sein kann, z.B. ein Netzwerkserver oder ein Cloudrechner. Die Datenverarbeitungseinrichtung kann insbesondere dazu eingerichtet sein, einen Ladeplan zum Laden eines an einem Ladepunkt angeschlossenen eines Elektrofahrzeugs aufzustellen. Die Datenverarbeitungseinrichtung kann, insbesondere bei einzelnen Häusern, insbesondere Einfamilienhäusern, einem HEMS entsprechen.

Die Aufgabe wird auch gelöst durch ein System mit einer Liegenschaft wie oben beschrieben und mindestens einem an einem Ladepunkt der Liegenschaft angeschlossenen Elektrofahrzeug. Das System kann analog zu dem Verfahren und/oder der Liegenschaft ausgebildet werden, und umgekehrt, und weist die gleichen Vorteile auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt ein System aus einer Liegenschaft mit einem daran angeschlossenen Elektrofahrzeug; und
- Fig.2: zeigt einen möglichen Ablauf eines Verfahrens zum Feststellen einer Anwesenheit eines an einem lokalen elektrischen Energienetz einer Liegenschaft angeschlossenen Zwischenspeichers.

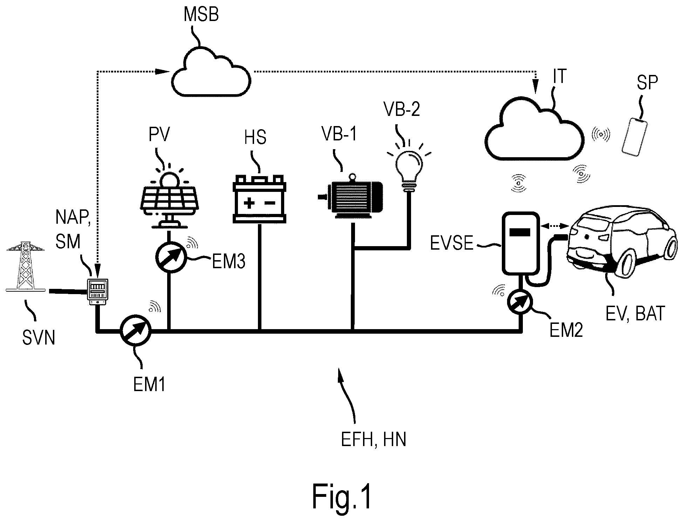

**Fig.1** zeigt ein System EFH, EV aus einer Liegenschaft in Form eines Einfamilienhauses EFH, von dem hier dessen lokales Energienetz ("Heimnetz", HN) gezeigt ist, und einem Elektrofahrzeug EV. Das Heimnetz HN ist über einen Netzanschlusspunkt NAP an ein öffentliches Energieverteilnetz EVN angeschlossen. An dem Netzanschlusspunkt NAP befindet sich ein Strommeter SM. Ist der Strommeter SM ein "Smart Meter", kann er die über den Netzanschlusspunkt NAP fließenden elektrischen Leistungen messen und an einem Messstellenbetreiber MSB übermitteln, welcher diese Daten wiederum an eine Datenverarbeitungseinrichtung IT übermitteln kann. Alternativ kann das Smart Meter SM lokal über eine digitale Schnittstelle ausgelesen werden. Der zeitliche Verlauf der Leistungsdaten kann z.B. in Form eines Lastgangs gespeichert werden. Ist der Strommeter SM nicht als Smart Meter ausgebildet oder übermittelt der Messstellenbetreiber MSB die Daten nicht an die Datenverarbeitungseinrichtung IT, kann durch den Betreiber des Heimnetzes HN ein eigenständiges erstes Energiemessgerät EM1 installiert worden sein, das die gleiche Leistung misst wie das Strommeter SM und diese Daten an die Datenverarbeitungseinrichtung IT übermitteln kann.

An das Heimnetz HN sind hier beispielhaft mehrere Endverbraucher VB-1, VB-2, optional eine Energieerzeugungseinheit in Form einer Photovoltaikanlage PV, ein Ladepunkt in Form einer Wallbox EVSE und möglicherweise ein stationärer Zwischenspeicher ("Heimspeicher" HS) angeschlossen.

Die Wallbox EVSE ist über ein zweites Energiemessgerät EM2 an das Heimnetz HN angeschlossen, das mit der Datenverarbeitungseinrichtung IT kommunizieren kann. Das zweite Energiemessgerät EM2 kann in einer Weiterbildung in die Wallbox EVSE integriert sein. Es ist eine Weiterbildung, dass die Wallbox EVSE direkt mit der Datenverarbeitungseinrichtung IT kommunizieren kann.

Die Photovoltaikanlage PV kann über ein drittes Energiemessgerät EM3 an das Heimnetz HN angeschlossen sein, das mit der Datenverarbeitungseinrichtung IT kommunizieren kann. Das dritte Energiemessgerät EM3 kann in einer Weiterbildung in die Photovoltaikanlage PV integriert sein. An die Wallbox EVSE ist über ein Ladekabel ein Elektrofahrzeug EV anschließbar, das dann mit der Wallbox EVSE digital kommunizieren kann, z.B. gemäß ISO 15118-20. Es ist eine Weiterbildung, dass das Elektrofahrzeug EV direkt mit der Datenverarbeitungseinrichtung IT kommunizieren kann.

Die Datenverarbeitungseinrichtung IT kann in einer Weiterbildung mit einem Nutzerendgerät, insbesondere mobilen Nutzerendgerät wie einem Smartphone SP usw. kommunizieren.

Die Datenverarbeitungseinrichtung IT kann dazu eingerichtet sein, einen Ladeplan zum Laden einer Antriebsbatterie BAT des Elektrofahrzeugs EV aufzustellen und dazu beispielsweise Tarifinformation und/oder ökologische Information (z.B. betreffend einen CO₂-Ausstoß zum Erzeugen einer kWh Strom) von einem Stromanbieter, Prognosedaten für die Photovoltaikanlage PV wie z.B. eine Wettervorhersage, Anlageparameter, usw. nutzen. Der Ladeplan kann auf grundsätzlich bekannte Weise mit der Wallbox EVSE oder mit dem Elektrofahrzeug EV ausgehandelt werden, welche bestimmte Laderandbedingungen stellen, beispielsweise bezüglich Mobilitätsanforderungen des Elektrofahrzeugs EV (z.B. Abfahrtzeitpunkt, Mindest-SoC zum Abfahrtzeitpunkt, maximale Ladeleistung, usw.). Im Rahmen des Ladeplans kann die Datenverarbeitungseinrichtung IT zudem die Antriebsbatterie BAT des Elektrofahrzeugs EV unter Einhaltung der Laderandbedingungen als (mobilen) Zwischenspeicher nutzen.

Die Datenverarbeitungseinrichtung IT ist ferner dazu eingerichtet, ein Laden (d.h., Aufladen und Entladen) des Heimspeichers HS zu steuern, falls vorhanden, was auf grundsätzlich bekannte Weise eine verbesserte Nutzung der elektrischen Leistung des Heimnetzes HN ermöglichen kann, falls der Datenverarbeitungseinrichtung IT bekannt ist, dass der Heimspeicher HS an dem Heimnetz HN angeschlossen ist und/oder bekannt ist, dass ein zuvor ggf. vorhandener Heimspeicher HS nicht mehr an dem Heimnetz HN angeschlossen ist.

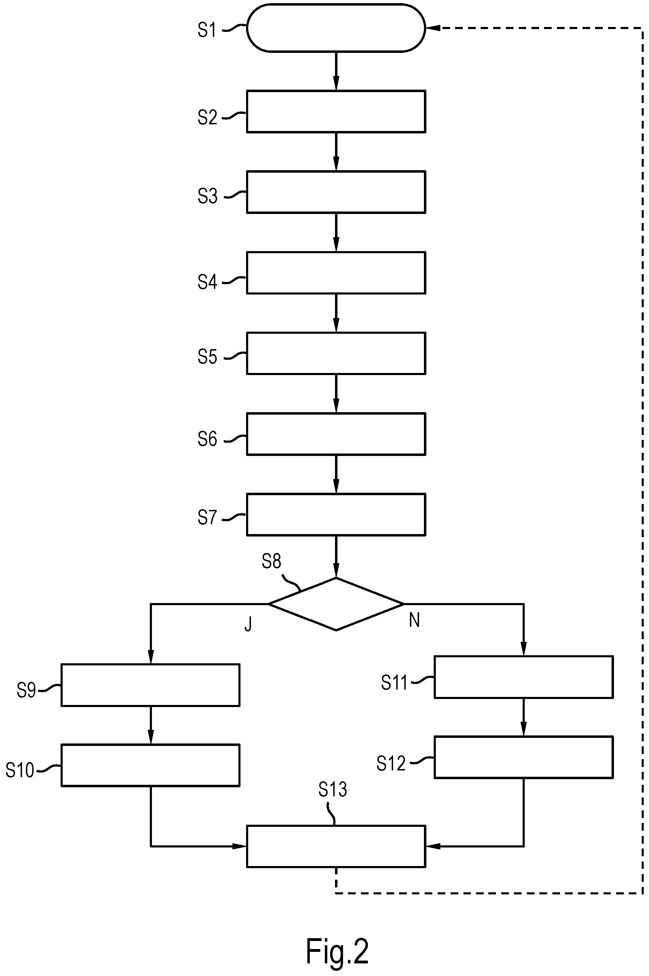

Fig.2 zeigt einen möglichen Ablauf des Verfahrens zum Feststellen einer An- oder Abwesenheit eines an dem Heimnetz HN angeschlossenen Heimspeichers HS. Dabei wird angenommen, dass an die Wallbox EVSE ein Elektrofahrzeug EV angeschlossen ist. Weiterhin sein angenommen, dass im Laufe des Verfahrens beide Schritte (b) und (c) durchgeführt werden, d.h., ein Ladevorgang und ein Entladevorgang.

In einem Schritt S1 wird ein Zeitpunkt ausgesucht, das Verfahren durchzuführen, beispielsweise während einer Nachtruhe. Außerdem wird eine Ladeleistung eingestellt, vorzugsweise von mindestens 75 % der maximalen Ladeleistung. Dabei können sich Aufladeleistung und Entladeleistung unterscheiden, brauchen es aber nicht.

In einem Schritt S2 wird während einer Laderuhephase des Elektrofahrzeugs EV mittels des ersten Energiemessgeräts EV1 gemäß Schritt (a) für eine vorgegebene Zeitdauer eine Grundlast bzw. Grundleistung L_{EM1,G} gemessen, insbesondere eine gemittelte Grundleistung L_{EM1,G}.

In einem optionalen Schritt S3 kann aus dem Lastgang der Grundleistung L_{EM1,G} eine Schwankungsbreite ΔL_{G} mit z.B. L_{EM1,G} innerhalb eines Bands [L_{G} - ΔL_{G}/2; L_{G} - ΔL_{G}/2] bestimmt werden.

In Schritt S4 wird rein beispielhaft für eine bestimmte Zeitdauer zunächst Schritt (b) durchgeführt, bei dem die Antriebsbatterie BAT des Elektrofahrzeugs EV mit einer mittels des zweiten Energiemessgeräts EM2 gemessenen Aufladeleistung L_{EM2,A} aufgeladen wird und gleichzeitig mittels des ersten Energiemessgeräts EM1 die Leistung L_{EM1,A} gemessen wird.

In einem Schritt S5 wird überprüft, ob die während des Aufladevorgangs gemessene Aufladeleistung L_{EM2,A} zumindest ungefähr der Differenz zwischen der mittels des ersten Energiemessgeräts EM1 gemessenen Leistung L_{EM1,A} abzüglich der (hier beispielhaft als gemittelt angenommenen) Grundleistung L_{EM1,G} entspricht. Dies kann auch so ausgedrückt werden, dass überprüft wird, ob ${L}_{EM 2 , A} \approx {L}_{EM 1 , A} - {L}_{EM 1 , G}$ entspricht, z.B. innerhalb einer vorgegebenen Schwankungsbreite 0,99 · (L_{EM1,A} - L_{EM1,G}) ≤ L_{EM2,A} ≤ 1,01 · (L_{EM1,A} - L_{EM1,G}), wobei die vorgegebene Schwankungsbreite grundsätzlich beliebig einstellbar ist. Wird die Schwankungsbreite ΔL_{G} durch Schritt S3 bestimmt, kann z.B. überprüft werden, ob $\left({L}_{EM 1 , A}-{L}_{EM 1 , G}-{ΔL}_{G}/2\right) \leq {L}_{EM 2 , A} \leq \left({L}_{EM 1 , A}-{L}_{EM 1 , G}+{ΔL}_{G}/2\right)$ gilt. Gelten die Bedingungen (1) oder (2), kann einer der folgenden Fälle vorliegen: (i) es ist kein Heimspeicher HS an das Heimnetz HN angeschlossen oder (ii) der Heimspeicher HS ist leer.

Gelten die Bedingungen (1) oder (2) jedoch nicht, sondern - je nach verwendeter Bedingung - vielmehr L_{EM2,A} > L_{EM1,A} - L_{EM1,G}, L_{EM2,A} > 1,01 · (L_{EM1,A} - L_{EM1,G}) bzw. L_{EM2,A} > L_{EM1,A} - L_{EM1,G} + ΔL_{G}/2, muss zusätzliche elektrische Leistung von einer Stromquelle des Heimnetzes HN zur Aufladung des Elektrofahrzeugs EV bereitgestellt worden sein.

Unter der Annahme, dass der Heimspeicher HN nicht vollständig entladen war und dass die Photovoltaikanlage PV (falls vorhanden) von Schritt S2 zu Schritt S4 nicht merklich mehr Solarstrom in das Heimnetz HN einspeist, kann bereits mit hoher Wahrscheinlichkeit davon ausgegangen werden, dass, falls die Bedingungen (1) bzw. (2) halten, kein Heimspeicher HS an dem Heimnetz HS angeschlossen ist bzw. im Umkehrschluss ein Heimspeicher HS an dem Heimnetz HS angeschlossen ist, falls die Bedingungen (1) bzw. (2) nicht halten

In Schritt S6 wird für eine bestimmte Zeitdauer Schritt (c) durchgeführt, bei dem die Antriebsbatterie des Elektrofahrzeugs EV mit einer mittels des zweiten Energiemessgeräts EV2 gemessenen Entladeleistung L_{EM2,E} in das Heimnetz HN entladen wird und gleichzeitig die Leistung L_{EM1,E} mittels des ersten Energiemessgeräts EM1 gemessen wird.

In Schritt S7 wird überprüft, ob die während des Entladevorgangs gemessene Entladeleistung L_{EM2,E} zumindest ungefähr der Differenz zwischen der mittels des ersten Energiemessgeräts EM1 gemessenen Leistung L_{EM1,E} abzüglich der Grundleistung L_{EM1,G} entspricht. Dies kann auch so ausgedrückt werden, dass überprüft wird, ob ${L}_{EM 2 , E} \approx {L}_{EM 1 , E} - {L}_{EM 1 , G}$ entspricht, z.B. innerhalb einer vorgegebenen Schwankungsbreite 0,99 · (L_{EM1,E} - L_{EM1,G}) ≤ L_{EM2,E} ≤ 1,01 · (L_{EM1,E} - L_{EM1,G}), wobei die vorgegebene Schwankungsbreite grundsätzlich beliebig einstellbar ist. Ist die Schwankungsbreite ΔL_{G} der Grundleistung L_{EM1,G} gemäß Schritt S3 berechnet worden, kann z.B. überprüft werden, ob $\left({L}_{EM 1 , E}-{L}_{EM 1 , G}-{ΔL}_{G}/2\right) \leq {L}_{EM 2 , E} \leq \left({L}_{EM 1 , E}-{L}_{EM 1 , G}+{ΔL}_{G}/2\right)$ gilt. Gelten die Bedingungen (3) oder (4), kann einer der folgenden Fälle vorliegen: (iii) es ist kein Heimspeicher HS an das Heimnetz HN angeschlossen oder (iv) der Heimspeicher HS ist voll aufgeladen. Gelten die Bedingungen (3) oder (4) jedoch nicht, muss zusätzliche elektrische Leistung von einer Senke des Heimnetzes HN aufgenommen worden sein. Unter der Annahme, dass der Heimspeicher HN nicht vollständig aufgeladen war und dass die Photovoltaikanlage PV (falls vorhanden) von Schritt S2 zu Schritt S4 nicht merklich weniger Solarstrom in das Heimnetz HN einspeist, kann bereits mit hoher Wahrscheinlichkeit davon ausgegangen werden, dass, falls die Bedingungen (3) bzw. (4) halten, kein Heimspeicher HS an dem Heimnetz HS angeschlossen ist bzw. im Umkehrschluss ein Heimspeicher HS an dem Heimnetz HS angeschlossen ist, falls die Bedingungen (3) bzw. (4) nicht halten.

In einem Schritt S8 wird überprüft, ob beide Bedingungen (1) bzw. (2) einerseits und (3) bzw. (4) andererseits vorliegen. Wenn dies der Fall ist ("J"), wird festgelegt, dass kein Heimspeicher HS an das Heimnetz HN angeschlossen ist, und es wird zu Schritt S9 verzweigt.

In Schritt S9 wird der Datenverarbeitungseinrichtung IT mitgeteilt, dass kein an das Heimnetz HS angeschlossener Heimspeicher HS gefunden wurde.

In Schritt S10 kann sich die Datenverarbeitungseinrichtung IT dann so konfigurieren, dass sie davon ausgeht, dass kein Heimspeicher HS angeschlossen ist, falls dies nicht schon vorher der Fall gewesen ist. Das Konfigurieren kann z.B. das Löschen eines Flags umfassen. Alternativ oder zusätzlich kann die Datenverarbeitungseinrichtung IT einen Nutzer benachrichtigen, beispielsweise durch Ausgeben einer Nachricht auf sein Smartphone SP.

Ist das Ergebnis der Überprüfung von Schritt S8 jedoch, dass nicht beide Bedingungen (1) bzw. (2) einerseits und (3) bzw. (4) andererseits zusammen vorliegen und insbesondere, dass keine der beiden Bedingungen (1) bzw. (2) einerseits und (3) bzw. (4) andererseits vorliegt ("N"), wird festgelegt, dass ein Heimspeicher HS an das Heimnetz HN angeschlossen ist, und es wird zu Schritt S11 verzweigt.

In Schritt S11 wird der Datenverarbeitungseinrichtung IT mitgeteilt, dass ein Heimspeicher HS an das Heimnetz HS angeschlossen ist.

In Schritt S12 kann sich die Datenverarbeitungseinrichtung IT dann so konfigurieren, dass sie davon ausgeht, dass ein Heimspeicher HS angeschlossen ist, falls dies nicht schon vorher der Fall gewesen ist. Das Konfigurieren kann z.B. das Setzen eines Flags umfassen. Alternativ oder zusätzlich kann die Datenverarbeitungseinrichtung IT einen Nutzer benachrichtigen, beispielsweise durch Ausgeben einer Nachricht auf sein Smartphone SP.

In einem auf Schritt S10 und Schritt S12 folgenden Schritt S13 wird das Verfahren beendet und ggf. zu einem späteren Zeitpunkt, z.B. einen Tag oder eine Woche später, wiederholt, wie durch den gestrichelten Pfeil angedeutet.

Das beschriebene Verfahren ist auch anwendbar, wenn die Photovoltaikanlage PV vorhanden ist, aber deren Einspeiseleistung L_{S} nicht bekannt oder nicht an die Datenverarbeitungseinrichtung IT übertragen wird. Um den Einfluss von Schwankungen der Einspeiseleistung L_{S} während der Durchführung des Verfahrens gering zu halten, kann das Verfahren z.B. nachts durchgeführt werden.

Ist die Einspeiseleistung L_{S} mittels des dritten Energiemessgeräts EM3 messbar und werden die Messdaten an die Datenverarbeitungseinrichtung IT übertragen, kann der Einfluss der Einspeiseleistung L_{S} besonders präzise berücksichtigt werden. Beispielsweise kann dann anstelle der vor Aufladen und Entladen einmal festgestellten Grundleistung L_{EM1,G} der Endverbraucher eine "reduzierte", zeitaktuelle Grundleistung L_{G,red} verwendet werden, bei der von der Grundleistung L_{EM1,G} die zeitlich variable Einspeiseleistung L_{S} separiert wird, z.B. indem L_{G,red} = L_{EM1,G} - L_{S} gesetzt wird und in Schritt S2 und ggf. S3 berechnet wird. In den obigen Beziehungen (1) bis (4) kann dann beispielsweise anstelle von L_{EM1,G} der Term L_{G,red} + L_{S} verwendet werden, wobei L_{S} zeitaktuell bestimmt wird.

Die obigen Berechnungen können vorzeichensensitiv sein, d.h., dass z.B. ein Verbrauch im Heimnetz HN ein positives Vorzeichen aufweist und die Einspeiseleistung L_{S} ein negatives Vorzeichen. Alternativ können alle Leistungen als Absolutwerte angegeben sein, wobei dann gewissen Vorzeichen in den obigen Gleichungen angepasst werden müssen.

Auch ist es eine Weiterbildung, dass aus dem zeitlichen Integral der Differenz zwischen Ladeleistung des Elektrofahrzeugs EV einerseits und der Differenz der am Netzanschlusspunkt NAP mittels des ersten Energiemessgeräts EM1 gemessenen Leistung und der Grundleistung andererseits eine Mindestkapazität des Heimspeichers HS berechnet wird. Dies kann für eine Aufladevorgang und einen Entladevorgang des Elektrofahrzeugs durchgeführt werden. Auch kann bei Vorhandensein einer Energieerzeugungseinrichtung deren Einspeiseleistung L_{S} berücksichtigt werden. Grundsätzlich kann die Mindestkapazität des Heimspeichers HS durch zeitliche Integration bzw. Aufsummierung der "Fehlbeträge" zwischen der in das Heimnetz HN eingespeisten Leistung(en) und der aus dem Heimnetz HN entnommenen Leistung(en) bestimmt werden. Dabei kann z.B. über einen gesamten Ladevorgang oder nur einen Teil davon zeitlich integriert werden.

In diesem Fall kann in Schritt S11 der Datenverarbeitungseinrichtung IT auch diese Mindestkapazität des Heimspeichers HS mitgeteilt werden.

Selbstverständlich ist die vorliegende Erfindung nicht auf das gezeigte Ausführungsbeispiel beschränkt.

So kann in dem Ausführungsbeispiel - und auch allgemein - zusätzlich oder alternativ zu einer über einen Zeitraum betrachteten Leistung die entsprechende Energie betrachtet werden. So kann z.B. in Schritt S2 anstelle der über einen Zeitraum Δt gemittelten Leistung eine gemittelte Energie E = L · Δt betrachtet werden. Ferner kann in Schritt S5 überprüft werden, ob die während des Aufladevorgangs gemessene zum Aufladen genutzte Energie zumindest ungefähr der Differenz zwischen der mittels des ersten Energiemessgeräts EM1 gemessenen energie abzüglich der gemittelten Energie des Grundverbrauchs entspricht.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- BAT: Antriebsbatterie
- EFH: Einfamilienhaus
- EM1: Energiemessgerät
- EM2: Energiemessgerät
- EM3: Energiemessgerät
- EV: Elektrofahrzeug
- EVSE: Wallbox
- HN: Heimnetz
- HS: Heimspeicher
- IT: Datenverarbeitungsanlage
- MSB: Messstellenbetreiber
- NAP: Netzanschlusspunkt
- PV: Photovoltaikanlage
- SVN: Stromverteilnetz
- SM: Strommeter
- SP: Smartphone
- S1-S13: Verfahrensschritte
- VB-1: Endverbraucher
- VB-2: Endverbraucher

## Patentansprüche

1. Verfahren (S1-S13) zum Feststellen einer Anwesenheit eines an einem lokalen elektrischen Energienetz (HN) einer Liegenschaft (EFH) angeschlossenen Zwischenspeichers (HS), wobei
- an einem Netzanschlusspunkt (NAP) zwischen dem lokalen Energienetz (HN) und einem öffentlichen Energieverteilnetz (EVN) ein erstes Energiemessgerät (EM1) vorhanden ist und
- ein Ladepunkt (EVSE) für ein Elektrofahrzeug (EV) über ein zweites Energiemessgerät (EM2) an das lokale Energienetz (HN) angeschlossen ist und
wobei bei dem Verfahren (S1-S13) dann, wenn an dem Ladepunkt (EVSE) ein Elektrofahrzeug (EV) angeschlossen ist,
(a) während einer Laderuhephase des Elektrofahrzeugs (EV) mittels des ersten Energiemessgeräts (EM1) eine Grundleistung gemessen wird (S2),
(b) eine Batterie (BAT) des Elektrofahrzeugs (EV) an dem Ladepunkt (EVSE) mit einer mittels des zweiten Energiemessgeräts (EM2) gemessenen Aufladeleistung aufgeladen wird und gleichzeitig mittels des ersten Energiemessgeräts eine Leistung (EM1) gemessen wird (S4),
alternativ oder zusätzlich zu Schritt (b)
(c) die Batterie des Elektrofahrzeugs (EV) an dem Ladepunkt (EVSE) mit einer mittels des zweiten Energiemessgeräts (EM2) gemessenen Entladeleistung entladen wird und gleichzeitig eine Leistung mittels des ersten Energiemessgeräts (EM1) gemessen wird (S6),
und dann
(d) überprüft wird, ob die während eines Ladevorgangs gemessene Ladeleistung zumindest ungefähr der Differenz zwischen der mittels des ersten Energiemessgeräts (EM1) gemessenen Leistung und der Grundleistung entspricht (S5, S7), und
(e) wenn dies der Fall ist(S8), angenommen wird, dass kein Zwischenspeicher (HS) an dem lokalen Energienetz (HN) angeschlossen ist (S9), ansonsten angenommen wird (S8), dass ein Zwischenspeicher (HS) an dem lokalen Energienetz (HN) angeschlossen ist (S10).

2. Verfahren (S1-S13) nach Anspruch 1, bei dem
- beide Schritte (b) und (c) durchgeführt werden (S4, S6) und
in Schritt (d)
- in einem Teilschrittschritt (d1) überprüft wird, ob die während des Aufladevorgangs gemessene Aufladeleistung zumindest ungefähr der Differenz zwischen der mittels des ersten Energiemessgeräts (EM1) gemessenen Leistung und der Grundleistung entspricht (S5), und
- in einem Teilschrittschritt (d2) überprüft wird, ob die während des Entladevorgangs gemessene Entladeleistung zumindest ungefähr der Differenz zwischen der mittels des ersten Energiemessgeräts (EM1) gemessenen Leistung und der Grundleistung entspricht (S7),
und
- in Schritt (e) nur dann, wenn dies für beide Teilschritte (d1) und (d2) der Fall ist, angenommen wird (S8), dass kein Zwischenspeicher (HS) an dem lokalen Energienetz (HN) angeschlossen ist.

3. Verfahren (S1-S13) nach einem der vorhergehenden Ansprüche, bei dem
- in Schritt (a) eine Schwankungsbreite der Grundleistung bestimmt wird (S3) und
- in Schritt (d) überprüft wird, ob die während des Entladevorgangs gemessene Ladeleistung der Differenz zwischen der mittels des ersten Energiemessgeräts (EM1) gemessenen Leistung und der Grundleistung innerhalb der Schwankungsbreite der Grundleistung entspricht.

4. Verfahren (S1-S13) nach einem der vorhergehenden Ansprüche, bei dem die Ladeleistung auf einen Wert von mindestens 75 % der maximalen Ladeleistung eingestellt wird, insbesondere auf die maximale Ladeleistung.

5. Verfahren (S1-S13) nach einem der vorhergehenden Ansprüche, bei dem als Zeitraum zum Durchführen des Verfahrens ein nächtlicher Zeitraum am Ort des lokalen Energienetzes gewählt wird.

6. Verfahren (S1-S13) nach einem der vorhergehenden Ansprüche, bei dem an das lokale Energienetz (HN) mindestens eine elektrische Energieerzeugungseinheit (PV) angeschlossen ist.

7. Verfahren (S1-S13) nach Anspruch 6, bei dem von der mindestens einen Energieerzeugungseinheit (PV) in das lokale Energienetz (HN) eingespeiste Einspeiseleistung mittels mindestens eines dritten Energiemessgeräts (EM3) gemessen wird und
- in Schritt (a) während der Laderuhephase des Elektrofahrzeugs (EV) mittels des ersten Energiemessgeräts (EM1) die Grundleistung gemessen wird und daraus eine reduzierte Grundleistung berechnet wird, welche der mittels des ersten Energiemessgeräts (EM1) gemessenen Grundleistung abzüglich der mittels des mindestens einen dritten Energiemessgeräts (EM3) gemessen Einspeiseleistung entspricht, und
- in Schritt (d) überprüft wird, ob die während eines Ladevorgangs gemessene Ladeleistung zumindest ungefähr der Differenz zwischen der mittels des ersten Energiemessgeräts (EM1) gemessenen Leistung und der Summe von reduzierter Grundleistung und Einspeiseleistung entspricht.

8. Verfahren (S1-S13) nach einem der vorhergehenden Ansprüche, bei dem aus dem zeitlichen Integral einer Differenz zwischen Ladeleistung des Elektrofahrzeugs (EV) einerseits und der Differenz der mittels des ersten Energiemessgeräts (EM1) gemessenen Leistung und der Grundleistung andererseits eine Mindestkapazität des stationären Zwischenspeichers (HS) berechnet wird.

9. Verfahren (S1-S13) nach einem der vorhergehenden Ansprüche, bei dem die Schritte (a) bis (e) bei angeschlossenem Elektrofahrzeug (EV) täglich oder wöchentlich wiederholt werden.

10. Verfahren (S1-S13) nach einem der vorhergehenden Ansprüche, wobei die Liegenschaft (EFH) mindestens einen Ladepunkt (EVSE) zum Laden eines Elektrofahrzeugs (EV) aufweist und mit einer eine Datenverarbeitungseinrichtung (IT) ausgerüstet oder gekoppelt ist, die dazu eingerichtet ist, einen Ladeplan zum Laden eines an einem Ladepunkt (EVSE) angeschlossenen Elektrofahrzeugs (EV) aufzustellen, wobei bei dem Verfahren
- dann, wenn die Datenverarbeitungseinrichtung (IT) so konfiguriert ist, dass sie davon ausgeht, dass kein elektrischer Zwischenspeicher (HS) an dem lokalen Energienetz (HN) angeschlossen ist, und in Schritt (e) angenommen wird, dass ein Zwischenspeicher (HS) an dem lokalen Energienetz (HN) angeschlossen ist, mindestens eine erste Aktion ausgelöst wird,
und/oder
- dann, wenn die Datenverarbeitungseinrichtung (IT) so konfiguriert ist, dass sie davon ausgeht, dass ein Zwischenspeicher (HS) an dem lokalen Energienetz angeschlossen ist, und in Schritt (e) angenommen wird, dass kein Zwischenspeicher (HS) an dem lokalen Energienetz (HN) angeschlossen ist, mindestens eine zweite Aktion ausgelöst wird.

11. Verfahren (S1-S13) nach Anspruch 10, bei dem die erste Aktion mindestens eine Aktion aus der Gruppe
- Benachrichtigung eines Nutzers,
- Umkonfigurieren der Datenverarbeitungseinrichtung (IT) so, dass sie davon ausgeht, dass ein Zwischenspeicher (HS) an dem lokalen Energienetz (HN) angeschlossen ist.

12. Verfahren (S1-S13) nach den Ansprüchen 8 und 11, bei dem das Umkonfigurieren der Datenverarbeitungseinrichtung umfasst, dass der Datenverarbeitungseinrichtung die Mindestkapazität des Zwischenspeichers mitgeteilt wird.

13. Verfahren (S1-S13) nach einem der Ansprüche 10 bis 12, bei dem die zweite Aktion mindestens eine Aktion aus der Gruppe
- Benachrichtigung eines Nutzers,
- Umkonfigurieren der Datenverarbeitungseinrichtung so, dass sie davon ausgeht, dass kein elektrischer Zwischenspeicher (HS) an dem lokalen Energienetz (HN) angeschlossen ist.

14. Liegenschaft (EFH), insbesondere Einfamilienhaus, wobei die Liegenschaft (EFH) dazu eingerichtet ist, das Verfahren (S1-S13) nach einem der vorhergehenden Ansprüche ablaufen zu lassen.

15. System (EFH, EV) mit einer Liegenschaft nach Anspruch 14 und mindestens einem an einem Ladepunkt (EVSE) der Liegenschaft (EFH) angeschlossenen Elektrofahrzeug (EV).

## Claims

1. Method (S1-S13) for detecting the presence of an intermediate storage device (HS) connected to a local electrical power supply system (HN) of a property (EFH), wherein
- a first energy meter (EM1) is present at a grid connection point (NAP) between the local power supply system (HN) and a public power distribution grid (EVN), and
- a charging point (EVSE) for an electric vehicle (EV) is connected to the local power supply system (HN) via a second energy meter (EM2), and
wherein the method (S1-S13) involves, when an electric vehicle (EV) is connected to the charging point (EVSE),
(a) a basic power being measured by means of the first energy meter (EM1) during a charging rest phase of the electric vehicle (EV) (S2),
(b) a battery (BAT) of the electric vehicle (EV) being charged at the charging point (EVSE) with a charging power measured by means of the second energy meter (EM2), and a power (EM1) simultaneously being measured by means of the first energy meter (S4),
as an alternative or in addition to step (b),
(c) the battery of the electric vehicle (EV) being discharged at the charging point (EVSE) with a discharging power measured by means of the second energy meter (EM2), and a power simultaneously being measured by means of the first energy meter (EM1) (S6),
and then
(d) a check being performed to ascertain whether the charging power measured during a charging process corresponds at least approximately to the difference between the power measured by means of the first energy meter (EM1) and the basic power (S5, S7), and
(e) if this is the case (S8), it being assumed that an intermediate storage device (HS) is not connected to the local power supply system (HN) (S9), otherwise it being assumed (S8) that an intermediate storage device (HS) is connected to the local power supply system (HN) (S10).

2. Method (S1-S13) according to Claim 1, in which
- both of steps (b) and (c) are carried out (S4, S6) and
in step (d)
- a substep (d1) comprises a check being performed to ascertain whether the charging power measured during the charging process corresponds at least approximately to the difference between the power measured by means of the first energy meter (EM1) and the basic power (S5), and
- a substep (d2) comprises a check being performed to ascertain whether the discharging power measured during the discharging process corresponds at least approximately to the difference between the power measured by means of the first energy meter (EM1) and the basic power (S7),
and
- only if this is the case for both of substeps (d1) and (d2) is it assumed (S8) in step (e) that an intermediate storage device (HS) is not connected to the local power supply system (HN).

3. Method (S1-S13) according to either of the preceding claims, in which
- step (a) comprises a range of variation of the basic power being ascertained (S3) and
- step (d) comprises a check being performed to ascertain whether the charging power measured during the discharging process corresponds to the difference between the power measured by means of the first energy meter (EM1) and the basic power within the range of variation of the basic power.

4. Method (S1-S13) according to one of the preceding claims, in which the charging power is set to a value of at least 75% of the maximum charging power, in particular to the maximum charging power.

5. Method (S1-S13) according to one of the preceding claims, in which the period chosen for carrying out the method is a nocturnal period at the location of the local power supply system.

6. Method (S1-S13) according to one of the preceding claims, in which at least one electrical power generation unit (PV) is connected to the local power supply system (HN) .

7. Method (S1-S13) according to Claim 6, in which infeed power fed into the local power supply system (HN) by the at least one power generation unit (PV) is measured by means of at least one third energy meter (EM3) and
- step (a) comprises the basic power being measured by means of the first energy meter (EM1) during the charging rest phase of the electric vehicle (EV) and said basic power being used to calculate a reduced basic power that corresponds to the basic power measured by means of the first energy meter (EM1) less the infeed power measured by means of the at least one third energy meter (EM3), and
- step (d) comprises a check being performed to ascertain whether the charging power measured during a charging process corresponds at least approximately to the difference between the power measured by means of the first energy meter (EM1) and the sum of the reduced basic power and the infeed power.

8. Method (S1-S13) according to one of the preceding claims, in which the integral with respect to time of a difference between the charging power of the electric vehicle (EV), on the one hand, and the difference between the power measured by means of the first energy meter (EM1) and the basic power, on the other hand, is used to calculate a minimum capacity of the static intermediate storage device (HS).

9. Method (S1-S13) according to one of the preceding claims, in which steps (a) to (e) are repeated daily or weekly when the electric vehicle (EV) is connected.

10. Method (S1-S13) according to one of the preceding claims, wherein the property (EFH) has at least one charging point (EVSE) for charging an electric vehicle (EV) and is equipped with or coupled to a data processing device (IT) conditioned to set up a charging schedule for charging an electric vehicle (EV) connected to a charging point (EVSE), wherein the method involves
- at least one first action being initiated if the data processing device (IT) is configured such that it assumes that an electrical intermediate storage device (HS) is not connected to the local power supply system (HN) and it is assumed in step (e) that an intermediate storage device (HS) is connected to the local power supply system (HN),
and/or
- at least one second action being initiated if the data processing device (IT) is configured such that it assumes that an intermediate storage device (HS) is connected to the local power supply system and it is assumed in step (e) that an intermediate storage device (HS) is not connected to the local power supply system (HN).

11. Method (S1-S13) according to Claim 10, in which the first action is at least one action from the group
- notifying a user,
- reconfiguring the data processing device (IT) such that it assumes that an intermediate storage device (HS) is connected to the local power supply system (HN).

12. Method (S1-S13) according to Claims 8 and 11, in which the reconfiguration of the data processing device comprises informing the data processing device of the minimum capacity of the intermediate storage device.

13. Method (S1-S13) according to one of Claims 10 to 12, in which the second action is at least one action from the group
- notifying a user,
- reconfiguring the data processing device such that it assumes that an electrical intermediate storage device (HS) is not connected to the local power supply system (HN).

14. Property (EFH), in particular a single-family house, wherein the property (EFH) is conditioned to run the method (S1-S13) according to one of the preceding claims.

15. System (EFH, EV) comprising a property according to Claim 14 and at least one electric vehicle (EV) connected to a charging point (EVSE) of the property (EFH).

## Revendications

1. Procédé (S1-S13) de constatation de la présence d'un accumulateur intermédiaire (HS) connecté à un réseau d'énergie électrique local (HN) d'un bien immobilier (EFH),
- un premier appareil de mesure d'énergie (EM1) étant présent à un point de raccordement au réseau (NAP) entre le réseau d'énergie local (HN) et un réseau de distribution d'énergie (EVN) public, et
- un point de recharge (EVSE) pour un véhicule électrique (EV) étant raccordé au réseau d'énergie local (HN) par l'intermédiaire d'un deuxième appareil de mesure d'énergie (EM2), et
avec le procédé (S1-S13), lorsqu'un véhicule électrique (EV) est raccordé au point de recharge (EVSE),
(a) pendant une phase de repos de recharge du véhicule électrique (EV), une puissance de base étant mesurée (S2) au moyen du premier appareil de mesure d'énergie (EM1) ;
(b) une batterie (BAT) du véhicule électrique (EV) étant chargée au point de recharge (EVSE) avec une puissance de recharge mesurée au moyen du deuxième appareil de mesure d'énergie (EM2) et une puissance (EM1) étant mesurée (S4) simultanément au moyen du premier appareil de mesure d'énergie ;
en alternative ou en plus de l'étape (b)
(c) la batterie du véhicule électrique (EV) étant déchargée au point de recharge (EVSE) avec une puissance de décharge mesurée au moyen du deuxième appareil de mesure d'énergie (EM2) et une puissance étant mesurée (S6) simultanément au moyen du premier appareil de mesure d'énergie (EM1) ;
et ensuite
(d) un contrôle étant effectué afin de vérifier si la puissance de recharge mesurée pendant un processus de recharge correspond au moins approximativement à la différence entre la puissance mesurée au moyen du premier appareil de mesure d'énergie (EM1) et la puissance de base (S5, S7), et
(e) si tel est le cas (S8), une supposition étant faite qu'aucun accumulateur intermédiaire (HS) n'est raccordé au réseau d'énergie local (HN) (S9), sinon une supposition étant faite (S8) qu'un accumulateur intermédiaire (HS) est raccordé au réseau d'énergie local (HN) (S10).

2. Procédé (S1-S13) selon la revendication 1, lors duquel
- les deux étapes (b) et (c) sont exécutées (S4, S6) et
à l'étape (d)
- dans une étape d'étape partielle (d1), un contrôle est effectué afin de vérifier si la puissance de recharge mesurée pendant un processus de recharge correspond au moins approximativement à la différence entre la puissance mesurée au moyen du premier appareil de mesure d'énergie (EM1) et la puissance de base (S5), et
- dans une étape d'étape partielle (d2), un contrôle est effectué afin de vérifier si la puissance de décharge mesurée pendant un processus de décharge correspond au moins approximativement à la différence entre la puissance mesurée au moyen du premier appareil de mesure d'énergie (EM1) et la puissance de base (S7),
et
- à l'étape (e), il n'est supposé (S8) qu'aucun accumulateur intermédiaire (HS) n'est raccordé au réseau d'énergie local (HN) que si cela est le cas pour les deux étapes partielles (d1) et (d2).

3. Procédé (S1-S13) selon l'une des revendications précédentes, lors duquel
- à l'étape (a), une plage de fluctuation de la puissance de base est déterminée (S3), et
- à l'étape (d), un contrôle est effectué afin de vérifier si la puissance de recharge mesurée pendant le processus de décharge correspond à la différence entre la puissance mesurée au moyen du premier appareil de mesure d'énergie (EM1) et la puissance de base dans la plage de fluctuation de la puissance de base.

4. Procédé (S1-S13) selon l'une des revendications précédentes, lors duquel la puissance de recharge est réglée à une valeur d'au moins 75 % de la puissance de recharge maximale, en particulier à la puissance de recharge maximale.

5. Procédé (S1-S13) selon l'une des revendications précédentes, lors duquel une période nocturne à l'emplacement du réseau d'énergie local est choisie comme période pour la mise en œuvre du procédé.

6. Procédé (S1-S13) selon l'une des revendications précédentes, lors duquel au moins une unité de production d'énergie électrique (PV) est raccordée au réseau d'énergie local (HN).

7. Procédé (S1-S13) selon la revendication 6, lors duquel la puissance d'injection injectée dans le réseau d'énergie local (HN) par l'au moins une unité de production d'énergie (PV) est mesurée au moyen d'au moins un troisième appareil de mesure d'énergie (EM3) et
- à l'étape (a), pendant la phase de repos de recharge du véhicule électrique (EV), la puissance de base est mesurée au moyen du premier appareil de mesure d'énergie (EM1) et une puissance de base réduite est calculée à partir de celle-ci, laquelle correspond à la puissance de base mesurée au moyen du premier appareil de mesure d'énergie (EM1) moins la puissance d'injection mesurée au moyen de l'au moins un troisième appareil de mesure d'énergie (EM3), et
- à l'étape (d), un contrôle est effectué afin de vérifier si la puissance de recharge mesurée pendant un processus de recharge correspond au moins approximativement à la différence entre la puissance mesurée au moyen du premier appareil de mesure d'énergie (EM1) et la somme de la puissance de base réduite et de la puissance d'injection.

8. Procédé (S1-S13) selon l'une des revendications précédentes, lors duquel une capacité minimale de l'accumulateur intermédiaire (HS) stationnaire est calculée à partir de l'intégrale dans le temps d'une différence entre la puissance de recharge du véhicule électrique (EV) d'une part et la différence entre la puissance mesurée au moyen du premier appareil de mesure d'énergie (EM1) et la puissance de base d'autre part.

9. Procédé (S1-S13) selon l'une des revendications précédentes, lors duquel les étapes (a) à (e) sont répétées quotidiennement ou hebdomadairement lorsque le véhicule électrique (EV) est raccordé.

10. Procédé (S1-S13) selon l'une des revendications précédentes, le bien immobilier (EFH) possédant au moins un point de recharge (EVSE) servant à la recharge d'un véhicule électrique (EV) et étant équipé ou couplé à un dispositif de traitement de données (IT) qui est conçu pour établir un plan de recharge pour recharger un véhicule électrique (EV) connecté à un point de recharge (EVSE), lors du procédé,
- lorsque l'appareil de traitement de données (IT) est configuré de telle sorte qu'il suppose qu'aucun accumulateur intermédiaire (HS) électrique n'est raccordé au réseau d'énergie local (HN) et qu'à l'étape (e), il est supposé qu'un accumulateur intermédiaire (HS) est raccordé au réseau d'énergie local (HN), alors au moins une première action étant déclenchée,
et/ou
- lorsque l'appareil de traitement de données (IT) est configuré de telle sorte qu'il suppose qu'un accumulateur intermédiaire (HS) électrique est raccordé au réseau d'énergie local et qu'à l'étape (e), il est supposé qu'aucun accumulateur intermédiaire (HS) n'est raccordé au réseau d'énergie local (HN), alors au moins une deuxième action étant déclenchée.

11. Procédé (S1-S13) selon la revendication 10, lors duquel la première action est au moins une action du groupe
- notification d'un utilisateur,
- reconfiguration du dispositif de traitement de données (IT) de telle sorte qu'il suppose qu'un accumulateur intermédiaire (HS) est raccordé au réseau d'énergie local (HN).

12. Procédé (S1-S13) selon les revendications 8 et 11, lors duquel la reconfiguration du dispositif de traitement de données comprend le fait que la capacité minimale de l'accumulateur intermédiaire est communiquée au dispositif de traitement de données.

13. Procédé (S1-S13) selon l'une des revendications 10 à 12, lors duquel la deuxième action est au moins une action du groupe
- notification d'un utilisateur,
- reconfiguration du dispositif de traitement de données de telle sorte qu'il suppose qu'aucun accumulateur intermédiaire (HS) électrique n'est raccordé au réseau d'énergie local (HN).

14. Bien immobilier (EFH), en particulier maison monofamille, le bien immobilier (EFH) étant conçu pour permettre la mise en œuvre du procédé (S1-S13) selon l'une des revendications précédentes.

15. Système (EFH, EV) comprenant un bien immobilier selon la revendication 14 et au moins un véhicule électrique (EV) raccordé à un point de recharge (EVSE) du bien immobilier (EFH).
